(19) Europäisches Patentamt
European Patent Office
Office européen des brevets

(11) **EP 3 039 097 B1**

(12) **EUROPEAN PATENT SPECIFICATION**

(45) Date of publication and mention
of the grant of the patent:
**18.09.2019 Bulletin 2019/38**

(21) Application number: **13898258.2**

(22) Date of filing: **29.11.2013**

(51) Int Cl.:
***C09K 8/524*** *(2006.01)*   ***C09K 8/52*** *(2006.01)*

(86) International application number:
**PCT/US2013/072452**

(87) International publication number:
**WO 2015/080747 (04.06.2015 Gazette 2015/22)**

(54) **HALOALKANE COMPOSITION FOR INHIBITING OR DISSOLVING ASPHALTENE OR PARAFFIN DEPOSITS**

HALOALKANZUSAMMENSETZUNG ZUR HEMMUNG ODER LÖSUNG VON ASPHALTEN- ODER PARAFFINABSCHEIDUNGEN

COMPOSITION D'HALOALCANE PERMETTANT D'INHIBER OU DE DISSOUDRE DES DÉPÔTS D'ASPHALTÈNE OU DE PARAFFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.07.2016 Bulletin 2016/27**

(73) Proprietor: **Halliburton Energy Services, Inc.**
**Houston, TX 77032-3219 (US)**

(72) Inventors:
• **SARDA, Anjali Ramesh**
  **Pune 411046 (IN)**
• **PATIL, Prajakta Ratnakar**
  **Pune 411038 (IN)**

(74) Representative: **King, Lawrence et al**
**A.A. Thornton & Co.**
**10 Old Bailey**
**London EC4M 7NG (GB)**

(56) References cited:
WO-A1-2004/037965     GB-A- 778 819
US-A- 4 207 193         US-A- 4 720 508
US-A- 4 775 489         US-A- 5 104 556
US-A- 5 438 039         US-A- 5 902 775
US-A1- 2005 082 231    US-A1- 2007 213 231
US-A1- 2008 020 949

**Description**

The disclosures are in the field of producing crude oil from subterranean formations or the transportation or storage of crude oil. More specifically, the disclosures generally relate to compositions and methods for inhibiting asphaltene or paraffin from settling or precipitating out of crude oil in a well or pipeline. Such compositions and methods can also be used to help remove asphaltene or paraffin deposits. US4775489 relates to a self-breaking, foamed, oil-in-water emulsion containing a water-immiscible organic solvent for paraffins and asphaltenes, an aqueous nonformation-damaging component, an inert gas, and surface active agents selected to promote a stable foamed emulsion despite contact of the treating fluid with the hydrocarbon and aqueous environment in the reservoir.

BACKGROUND

To produce oil or gas from a reservoir, a well is drilled into a subterranean formation, which may be the reservoir or adjacent to the reservoir. Typically, a wellbore of a well must be drilled hundreds or thousands of metres (feet) into the earth to reach an oil or gas reservoir.

Oil or gas in the subterranean formation may be produced by driving fluid into the well using, for example, a pressure gradient that exists between the formation and the wellbore, the force of gravity, displacement of the fluid using a pump or the force of another fluid injected into the well or an adjacent well.

Oil is typically produced from a well at relatively high temperature and high pressure compared to the conditions during production from a reservoir, transportation through pipelines, or on the surface. As the crude oil flows from a subterranean formation into the production tubulars of the wellbore, it is transported through the tubulars of the wellbore to the wellhead. Further, the crude oil produced at the wellhead must be transported to a refinery to be processed and separated into various components, for example, to make various grades of fuels and oils. A common method of transporting crude oil is through pipelines. Pipelines are at or near the surface of the ground or can be subsea at or near the seabed. These temperatures and pressures are usually much lower than the temperature and pressure of the subterranean formation.

Asphaltenes and paraffins may be present in crude oils. Asphaltenes and paraffins in crude oil are in equilibrium under normal reservoir conditions. As crude oil is produced, however, this equilibrium can be upset by a number of factors leading to asphaltene or paraffin deposition. As the temperature and pressure of the crude oil falls, asphaltene or paraffin in the crude oil tends to become a solid material that precipitates or settles out of the crude oil. The asphaltene or paraffin material forms solid deposits that accumulate anywhere in the production system, for example, in the matrix of the formation, on the inner wall of the production tubing, or in pipelines.

Although often mentioned together, asphaltene and paraffin are distinctly different in composition and behavior.

**Asphaltenes**

Asphaltenes are a problem in crude oil production in many areas around the world. Asphaltene deposition can occur anywhere in the production life cycle: in the matrix of the formation, in a previously-created fracture in the formation, in a near-wellbore region, in a gravel pack, on a downhole screen, in the wellbore, in production tubing, in surface flowlines, in pipelines, and in related equipment such as downhole or surface chokes. Asphaltene problems can significantly reduce well productivity, causing troublesome operational issues, damaging formations, and decreasing production. Asphaltene deposits can also cause operational problems in pipelines.

Asphaltenes occur in varying, and sometimes quite substantial amounts in crude oils. They are a group of organic materials in which the molecules contain fused aromatic ring systems and include nitrogen, sulfur, and/or oxygen heteroatoms. They are accordingly more polar than the other fractions of crude oil (saturates, aromatics and resins).

They are believed, by some researchers, to occur as colloidal suspensions in crude oil and are prone to separate out if the oil is subjected to a reduction in temperature or pressure, as frequently happens during production from an oil well. Asphaltenes separate out if crude oil is mixed with a less polar diluent (notably a low-boiling n-alkane having less than six carbon atoms) and they are generally defined as the fraction of crude oil which is precipitated by addition of n-pentane or n-heptane but which is soluble in toluene.

Predicting where asphaltene deposition might occur requires an understanding of the mechanisms for asphaltene deposition. The major causes are pressure decrease and the mixture of the crude oil with an incompatible fluid in a well or pipeline. *See, e.g.,* K.A. Frost, R.D. Daussin, SPE, and M.S. van Domelen, "New, Highly Effective Asphaltene Removal System with Favorable HSE Characteristics," Halliburton, Society of Petroleum Engineers, SPE 112420, 2008.

For example, asphaltenes have a higher affinity to adsorb on surfaces with a similar structure, that is, on surfaces already with adsorbed asphaltenes. Both van der Waals forces and polar-polar interactions are believed to play a role in the adsorption of asphaltenes onto minerals and rock. The presence of water also affects adsorption of asphaltenes. Water-wet rock exhibits considerable reduction in adsorbed asphaltenes, but the polar constitutions of asphaltenes can penetrate the water film and compete for active sites on the rock surface.

Asphaltenes are negligibly soluble in water. Solvents such as toluene and xylene generally dissolve only about 50% of a typical downhole sample of asphaltenes, which has poor solubility parameters in these solvents.

It is often preferable to inhibit the precipitation of asphaltenes than to try and clean up deposited asphaltenes.

The most common asphaltene removal techniques use xylene or xylene mixtures. A number of factors can affect the removal of asphaltene from production systems. Some of these factors are: solvent used, type of asphaltene, quantity of asphaltene, temperature, and contact time. Any or all of these can help determine success or failure of an asphaltene removal treatment.

It may not be possible to achieve full desorption of asphaltenes. Further, desorption of asphaltenes requires more time than the dissolution of precipitated asphaltenes. At best, the rock surface may be changed from oil wet to the range of water wet to intermediate wet. Clean up with pure toluene may remove the majority of the asphaltenes, but the surface on which the asphaltenes are adsorbed will still be covered with a layer of asphaltenes. This layer is likely to be the most polar and highest molecular weight layer, so the rock surface will still be intermediate wet to oil wet. However, a full water-wet formation may not be necessary because an intermediate to slightly water-wet formation may be optimum for oil production.

Unfortunately, xylene is an aromatic with undesirable health, safety, and environmental characteristics.

### Paraffins

Paraffin accounts for a significant portion of a majority of crude oils that are greater than about 20 °API. Paraffins are composed of straight-chain hydrocarbons generally accepted to be C18-20 up to C70 or higher. Paraffins may also contain a variety of branched alkyl or saturated cyclic groups. The paraffin molecules that are larger than about $C_{20}H_{42}$ tend to be the components that cause paraffin deposits or congealing oil in crude oil systems. The deposits vary in consistency from rock hard for the highest chain-length paraffin to very soft, mayonnaise-like congealing oil deposits. Paraffin (wax) is mostly found as a white, odorless, tasteless, waxy solid, with a typical melting point ranges from 47 °C to 64 °C (117 °F to 147 °F), and a density of around 0.9 g/cm$^3$ It is insoluble in water, but soluble in ether, benzene, and certain esters.

Paraffin deposition can occur anywhere in the production life cycle: in the matrix of the formation, in a previously-created fracture in the formation, in a near-wellbore region, in a gravel pack, on a downhole screen, in the wellbore, in production tubing, in surface flowlines, in pipelines, and in related equipment such as downhole or surface chokes. Paraffin problems can significantly reduce well productivity, causing troublesome operational issues, damaging formations, and decreasing production. Paraffin deposits can also cause operational problems in pipelines.

Solvency has been one of the primary methods of removing these deposits. A number of factors can affect the removal of paraffin from production systems. Some of these factors are: solvent used, type of paraffin, quantity of paraffin, temperature, and contact time. Any or all of these can help determine success or failure of a paraffin removal treatment.

Different solvents have different abilities to dissolve paraffin. Two general classes of solvents used in the oilfield to dissolve paraffin are aliphatic and aromatic. Common aliphatic solvent used in the oilfield are diesel, kerosene, and condensate. Aromatic solvent used are xylene and toluene. Among all the solvents, xylene and toluene are more effective than aliphatic solvents in removing most of the paraffin deposits. Traditionally, aromatic solvents such as xylene and toluene have been used to remove damaging organic deposits such as asphaltene and paraffin from wellbore tubulars and the formation matrix. However, governmental regulations on the usage, disposal, and volatile emission-limits of aromatic solvents are becoming increasingly restrictive. Practically, the flammability, acute toxicity, and environmental contamination concerns have made their use less attractive.

### SUMMARY OF THE DISCLOSURE

The disclosure relates to compositions and methods that can be used for inhibiting the settling or precipitation of asphaltene or paraffin from crude oil. The disclosure also relates to compositions and methods for dissolving or removing asphaltene or paraffin deposits.

A composition is provided that includes: (A) one or more aliphatic compounds having 6 to 21 carbon atoms; (B) one or more haloalkanes having 9 to 24 carbon atoms wherein the one or more haloalkanes comprises a bromoalkane; and (C) crude oil.

In various embodiments, a composition according to the disclosure is substantially free from aromatic chemical compounds.

In addition, methods for inhibiting the deposition of an organic material or for removing at least some of the deposited organic material in a portion of a wellbore, wellbore tubular, fracture system, matrix of a subterranean formation, or pipeline are provided. The methods comprise the steps of: (A) forming or providing such a composition according to the disclosure; and (B) contacting the composition with the portion the portion of the wellbore or with the deposited organic material in the wellbore.

According to the disclosure, the compositions and methods can be used to help prevent the precipitation of asphaltene or paraffin from crude oil. For example, such an embodiment can be useful in a subterranean formation, a wellbore, or a pipeline.

The present disclosure also relates to oil recovery techniques in which the recovery of oil from a reservoir is assisted by injecting a solvent composition into the reservoir formation to reduce the viscosity of the crude oil therein and to inhibit asphaltene or paraffin deposits. Such techniques have been applied to the recovery of various oils, including the recovery of heavy oils and the enhanced recovery of medium and light oils. For example, a composition according to the disclosure can be mixed with the crude oil and form a mixture which has lower viscosity than that of the undiluted oil. In addition, the mixture helps prevent the depositing of asphaltene or paraffin from the crude oil as it is produced from the subterranean formation.

According to various embodiments of the disclosure, compositions and methods are provided that can be used to help remove at least some of a deposited solid organic material in a portion of a wellbore, wellbore tubular, fracture system, matrix of a subterranean formation, or pipeline.

These and other aspects of the disclosure will be apparent to one skilled in the art upon reading the following detailed description. While the disclosure is susceptible to various modifications and alternative forms, specific embodiments thereof will be described in detail and shown by way of example.

DETAILED DESCRIPTION OF PRESENTLY PREFERRED EMBODIMENTS AND BEST MODE

*Oil and Gas Reservoirs*

In the context of production from a well, "oil" and "gas" are understood to refer to crude oil and natural gas, respectively. Oil and gas are naturally occurring hydrocarbons in certain subterranean formations. Oil and gas are composed of one or more hydrocarbons. A hydrocarbon is a compound having at least hydrogen and carbon. The molecular structure of hydrocarbon compounds can range from being as simple as methane ($CH_4$) to a large, highly complex compound. Petroleum is a complex mixture of hydrocarbons. An example of petroleum is crude oil.

A "subterranean formation" is a body of rock that has sufficiently distinctive characteristics and is sufficiently continuous for geologists to describe, map, and name it. A subterranean formation having a sufficient porosity and permeability to store and transmit fluids is sometimes referred to as a "reservoir." A subterranean formation containing oil or gas may be located under land or under the seabed off shore. Oil and gas reservoirs are typically located in the range of a few hundred metres (feet, shallow reservoirs) to a few tens of thousands of meters (feet, ultra-deep reservoirs) below the surface of the land or seabed.

*Well Servicing and Fluids*

Generally, well services include a wide variety of operations that may be performed in oil, gas, geothermal, or water wells, such as drilling, cementing, completion, and intervention. Well services are designed to facilitate or enhance the production of desirable fluids such as oil or gas from or through a subterranean formation. A well service usually involves introducing a fluid into a well.

*Well Terms*

A "well" includes a wellhead and at least one wellbore from the wellhead penetrating the earth. The "wellhead" is the surface termination of a wellbore, which surface may be on land or on a seabed.

A "well site" is the geographical location of a wellhead of a well. It may include related facilities, such as a tank battery, separators, compressor stations, heating or other equipment, and fluid pits. If offshore, a well site can include a platform.

The "wellbore" refers to the drilled hole, including any cased or uncased portions of the well or any other tubulars in the well. The "borehole" usually refers to the inside wellbore wall, that is, the rock surface or wall that bounds the drilled hole. A wellbore can have portions that are vertical, horizontal, or anything in between, and it can have portions that are straight, curved, or branched. As used herein, "uphole," "downhole," and similar terms are relative to the direction of the wellhead, regardless of whether a wellbore portion is vertical or horizontal.

As used herein, introducing "into a well" means introducing at least into and through the wellhead. According to various techniques known in the art, tubulars, equipment, tools, or fluids can be directed from the wellhead into any desired portion of the wellbore.

As used herein, the word "tubular" means any kind of structural body in the general form of a tube. Tubulars can be of any suitable body material, but in the oil field they are most commonly of steel. Examples of tubulars in oil wells include, but are not limited to, a drill pipe, a casing, a tubing string, a line pipe, and a transportation pipe.

As used herein, the term "annulus" means the space between two generally cylindrical objects, one inside the other. The objects can be concentric or eccentric. Without limitation, one of the objects can be a tubular and the other object can be an enclosed conduit. The enclosed conduit can be a wellbore or borehole or it can be another tubular. The following are some non-limiting examples illustrating some situations in which an annulus can exist. Referring to an oil, gas, or water well, in an open hole well, the space between the outside of a tubing string and the borehole of the wellbore is an annulus. In a cased hole, the space between the outside of the casing and the borehole is an annulus. In addition, in a cased hole there may be an annulus between the outside cylindrical portion of a tubular such as a production tubing string and the inside cylindrical portion of the casing. An annulus can be a space through which a fluid can flow or it can be filled with a material or object that blocks fluid flow, such as a packing element. Unless otherwise clear from the context, as used herein an "annulus" is a space through which a fluid can flow.

As used herein, a "fluid" broadly refers to any fluid adapted to be introduced into a well for any purpose. A fluid can be, for example, a drilling fluid, a setting composition, a treatment fluid, or a spacer fluid. If a fluid is to be used in a relatively small volume, for example less than about 200 barrels (about 8,400 US gallons or about 32 $m^3$), it is sometimes referred to as a wash, dump, slug, or pill.

As used herein, the word "treatment" refers to any treatment for changing a condition of a portion of a pipeline, a wellbore, or a subterranean formation adjacent a wellbore; however, the word "treatment" does not necessarily imply any particular treatment purpose. A treatment usually involves introducing a fluid for the treatment, in which case it may be referred to as a treatment fluid, into a well. As used herein, a "treatment fluid" is a fluid used in a treatment. The word "treatment" in the term "treatment fluid" does not necessarily imply any particular treatment or action by the fluid.

In the context of a well or wellbore, a "portion" or "interval" refers to any downhole portion or interval of the length of a wellbore.

A "zone" refers to an interval of rock along a wellbore that is differentiated from uphole and downhole zones based on hydrocarbon content or other features, such as permeability, composition, perforations or other fluid communication with the wellbore, faults, or fractures. A zone of a wellbore that penetrates a hydrocarbon-bearing zone that is capable of producing hydrocarbon is referred to as a "production zone." A "treatment zone" refers to a zone into which a fluid is directed to flow from the wellbore. As used herein, "into a treatment zone" means into and through the wellhead and, additionally, through the wellbore and into the treatment zone.

As used herein, a "downhole" fluid is an in-situ fluid in a well, which may be the same as a fluid at the time it is introduced, or a fluid mixed with another fluid downhole, or a fluid in which chemical reactions are occurring or have occurred in-situ downhole.

Generally, the greater the depth of the formation, the higher the static temperature and pressure of the formation. Initially, the static pressure equals the initial pressure in the formation before production. After production begins, the static pressure approaches the average reservoir pressure.

Two fluids are incompatible if undesirable physical or chemical interactions occur when the fluids are mixed. Incompatibility is characterized by undesirable changes in apparent viscosity, shear stresses, or precipitation.

*Production Stages*

"Primary production," also known as "primary recovery," is the first stage of hydrocarbon production, in which natural reservoir energy, such as gas drive, water drive, or gravity drainage, displaces hydrocarbons from the reservoir and into the wellbore. However, it is usually soon necessary to implement an artificial lift system from the wellbore adjacent the production zone to the wellhead, such as a rod pump, an electrical submersible pump, or a gas-lift installation. Production to the wellhead by natural reservoir energy or using artificial lift is considered primary recovery. The primary recovery stage reaches its limit either when the reservoir pressure is so low that the production rates are not economical, or when the proportions of gas or water in the production stream are too high. During primary recovery, only a small percentage of the initial hydrocarbons in place are produced, typically around 10% for oil reservoirs.

"Secondary production," also known as "secondary recovery," is the second stage of hydrocarbon production. It requires reservoir injection, such as water flooding techniques, to displace hydrocarbons from the reservoir and into the wellbore.

"Tertiary production," also known as "tertiary recovery," is the third stage of hydrocarbon production. The principal tertiary recovery techniques are thermal methods, gas injection, and chemical flooding.

The term "enhanced oil recovery" ("EOR") is an oil recovery enhancement method using sophisticated techniques that alter the original properties of oil. Once ranked as a third stage of oil recovery that was carried out after secondary recovery, the techniques employed during enhanced oil recovery can actually be initiated at any time during the productive life of an oil reservoir. Its purpose is not only to restore formation pressure, but also to improve oil displacement or fluid flow in the reservoir. The three major types of enhanced oil recovery operations are chemical flooding (alkaline flooding or micellar-polymer flooding), miscible displacement (carbon dioxide [$CO_2$] injection or hydro-

carbon injection), and thermal recovery (steam flood or in-situ combustion). The optimal application of each type depends on reservoir temperature, pressure, depth, net pay, permeability, residual oil and water saturations, porosity and fluid properties such as oil API gravity and viscosity. It is typically applied to heavy oil having an API gravity of less than 22.3 degrees.

*Pipeline Terms*

Tubulars can be used to transport fluids such as oil, gas, water, liquefied methane, coolants, and heated fluids into or out of a subterranean formation. For example, a tubular can be placed underground to transport produced hydrocarbons or water from a subterranean formation to another location.

"Pipeline transport" refers to a conduit made from pipes connected end-to-end for long-distance fluid transport. Oil pipelines are made from steel or plastic tubulars with inner diameter typically from about 100 to 1,200 mm (4 to about 48 inches). Most pipelines are typically buried at a depth of about 0.91 to 1.8 m (3 to 6 feet). To protect pipes from impact, abrasion, and corrosion, a variety of methods are used. These can include wood lagging (wood slats), concrete coating, rock shield, high-density polyethylene, imported sand padding, and padding machines. The oil is kept in motion by pump stations along the pipeline, and usually flows at speed of about 3.3 to 20 ft/s (1 to 6 meters per second).

Gathering pipelines are a group of smaller interconnected pipelines forming complex networks with the purpose of bringing crude oil or natural gas from several nearby wells to a treatment plant or processing facility. In this group, pipelines are usually relatively short (usually about 100 to 1000 meters (yards)) and with small diameters (usually about 0.1 to 0.3 metres (4 to 12 inches)). Also, sub-sea pipelines for collecting product from deep water production platforms are considered gathering systems.

Transportation pipelines are mainly long pipes (many miles or kilometers) with large diameters (larger than 30 cm (12 inches)), moving products (oil, gas, refined products) between cities, countries, and even continents. These transportation networks include several compressor stations in gas lines or pump stations for crude oil or multi-product pipelines.

Distribution pipelines are composed of several interconnected pipelines with small diameters (usually about 2.5 to 10.2 cm (1 to 4 inches), used to take the products to the final consumer. An example of distribution pipelines is feeder lines to distribute natural gas to homes and businesses downstream. Pipelines at terminals for distributing products to tanks and storage facilities are included in this group.

A "portion" or "interval" of a pipeline refers to any portion of the length of a pipeline.

*Phases, Physical States, and Materials*

As used herein, "phase" is used to refer to a substance having a chemical composition and physical state that is distinguishable from an adjacent phase of a substance having a different chemical composition or a different physical state.

The word "material" is anything made of matter, constituted of one or more phases. Rock, water, air, metal, cement slurry, sand, and wood are all examples of materials. The word "material" can refer to a single phase of a substance on a bulk scale (larger than a particle) or a bulk scale of a mixture of phases, depending on the context.

As used herein, if not other otherwise specifically stated, the physical state or phase of a substance (or mixture of substances) and other physical properties are determined at a temperature of 25 °C (77 °F) and a pressure of 0.1 MPa (1 atmosphere, Standard Laboratory Conditions) without applied shear.

*Solubility*

A substance is considered to be "soluble" in a liquid if at least 10 grams of the substance can be dissolved in one liter of the liquid when tested at 25 °C (77 °F) and 0.1 MPa (1 atmosphere) pressure for 2 hours, considered to be "insoluble" if less than 1 gram per liter, and considered to be "sparingly soluble" for intermediate solubility values.

As used herein, the term "polar" means having a dielectric constant greater than 30. The term "relatively polar" means having a dielectric constant greater than about 2 and less than about 30. "Non-polar" means having a dielectric constant less than 2.

*Fluids*

A fluid can be a homogeneous or heterogeneous. In general, a fluid is an amorphous substance that is or has a continuous phase of particles that are smaller than about 1 micrometer that tends to flow and to conform to the outline of its container.

Every fluid inherently has at least a continuous phase. A fluid can have more than one phase. The continuous phase of a treatment fluid is a liquid under Standard Laboratory Conditions.

As used herein, "non-aqueous" fluid means the continuous phase is a water-immiscible fluid, such as oleaginous materials (for example, mineral oil, enhanced mineral oil, paraffinic oil, C16-C18 internal olefins, or C8-C16 fatty acid/2-ethylhexyl esters).

As used herein, an "oil-based" fluid means that oil is the dominant material by weight of the continuous phase of the fluid. In this context, the oil of an oil-based fluid can be any oil.

In the context of a fluid, "oil" is understood to refer to any kind of oil in a liquid state, whereas gas is understood to refer to a physical state of a substance, in contrast to a liquid. In this context, an oil is any substance that is liquid under Standard Laboratory Conditions, is hydrophobic, and soluble in organic solvents. Oils typically have a high carbon and hydrogen content and are non-polar substances. This general definition includes classes such as petrochemical oils, vegetable oils, and many organic solvents. All oils, even synthetic oils, can be traced back to organic sources.

*Biodegradability*

Biodegradable means the process by which complex molecules are broken down by micro-organisms to produce simpler compounds. Biodegradation can be either aerobic (with oxygen) or anaerobic (without oxygen). The potential for biodegradation is commonly measured on fluids or their components to ensure that they do not persist in the environment. A variety of tests exist to assess biodegradation.

As used herein, a substance is considered "biodegradable" if the substance passes a ready biodegradability test or an inherent biodegradability test. It is preferred that a substance is first tested for ready biodegradability, and only if the substance does not pass at least one of the ready biodegradability tests then the substance is tested for inherent biodegradability.

In accordance with Organisation for Economic Co-operation and Development ("OECD") guidelines, the following six tests permit the screening of chemicals for ready biodegradability. As used herein, a substance showing more than 60% biodegradability in 28 days according to any one of the six ready biodegradability tests is considered a pass level for classifying it as "readily biodegradable," and it may be assumed that the substance will undergo rapid and ultimate degradation in the environment. The six ready biodegradability tests are: (1) 301A: DOC Die-Away; (2) 301B: CO2 Evolution (Modified Sturm Test); (3) 301C: MITI (I) (Ministry of International Trade and Industry, Japan); (4) 301D: Closed Bottle; (5) 301E: Modified OECD Screening; and (6) 301F: Manometric Respirometry. The six ready biodegradability tests are published and well known in the art.

As used herein, a substance with a biodegradation or biodegradation rate of >20% is regarded as "inherently primary biodegradable." A substance with a biodegradation or biodegradation rate of >70% is regarded as "inherently ultimate biodegradable." As used herein, a substance passes the inherent biodegradability test if the substance is either regarded as inherently primary biodegradable or inherently ultimate biodegradable when tested according to any one of three inherent biodegradability tests. The three tests are: (1) 302A: 1981 Modified SCAS Test; (2) 302B: 1992 Zahn-Wellens Test; and (3) 302C: 1981 Modified MITI Test. Inherent biodegradability refers to tests which allow prolonged exposure of the test compound to microorganisms, a more favorable test compound to biomass ratio, and chemical or other conditions which favor biodegradation. The three inherent biodegradability tests are published and well known in the art.

## General Approach and Discussion

The disclosure relates to compositions and methods that can be used for inhibiting the settling or precipitation of asphaltene or paraffin from crude oil. The disclosure also relates to compositions and methods for dissolving or removing asphaltene or paraffin deposits.

A composition is provided that includes: (A) one or more aliphatic compounds having 6 to 21 carbon atoms; (B) one or more haloalkanes having 9 to 24 carbon atoms wherein the one or more haloalkanes comprises a bromoalkane; and (C) crude oil.

The newly developed compositions and methods according to the disclosure are very effective for both asphaltene and paraffin inhibition or removal. It is believed that the compositions provide a synergy in the combination of the aliphatic compounds and the one or more bromoalkanes in the action of maintaining asphaltene or paraffin in solution in a crude oil or in dissolving asphaltene deposits.

The use of aromatics is an important environmental and health concern. Preferably, the composition is formulated to have low aromatics content (less than about 5% by weight). More preferably, the composition is formulated to have less than about 1% aromatic compounds by weight.

The flash point of the organic solvent blend is an important safety concern. In various embodiments, the flash point of the composition is at least 60 °C (140 °F). Preferably, the flash point of the composition or each of its components is at least 66 °C (150 °F). Most preferably, the flash point of the composition or each of its components is at least 71 °C (160 °F). Ideally, the flash point of the composition or each of its components is at least 110 °C (230 °F). In comparison, for example, the flash point of xylene is only 27 °C (80 °F).

Another concern is the biodegradability of compositions used in wells and pipelines.

In addition, a Chemical Scoring Index ("CSI") has been developed to help reduce various environmental concerns to a single score. See Society of Petroleum Engineers ("SPE") 126451, Are your Chemical Products Green?-A Chemical Hazard Scoring System, Johnny Sanders, Denise Tuck, and Robert Sherman, Halliburton, 2010. In various embodiments, a composition according to the disclosure is formulated to have a low Chemical Score Index (CSI) of less than about 500. More preferably, the CSI is less than about 300. Most preferably, the CSI is less than about 260. A chemical score index (CSI) of less than about 260 is very low and acceptable.

Yet another concern is that a treatment composition be non-damaging to elastomers used in seals, hoses, and other devices, which are commonly associated with wells or pipelines. Unlike xylene or other aromatic compositions, a composition according to the disclosure is non-damaging to elastomers that may be present in wells or pipelines, that is, the elastomers are not deteriorated in the presence of the composition, even under downhole conditions.

In various embodiments and preferably, the composition has more two or more of the above preferred characteristics.

Without being limited by any theoretical explanation, it is believed that the combination of these different solvents helps keep the asphaltenes and paraffin in solution with the crude oil. The composition can also be used to help dissolve or remove asphaltenes or paraffin deposits.

In various embodiments, the disclosure can provide a one-step inhibitor composition that can be used for asphaltene paraffin inhibition. In various embodiments, the composition is applied as a single fluid treatment without need for pre-treatment or posttreatment of other fluids for asphaltenes removal.

**Aliphatic Compounds**

The aliphatic compound of the composition of the present disclosure has 6 to 21 carbon atoms. It is believed that the longer-chain aliphatic compounds are less likely to cause precipitation of an asphaltene. In various embodiments and preferably, the composition comprises less than 5% by weight lower alkanes having less than 6 carbon atoms. More preferably, the composition comprises less than 0.25% by weight of lower alkanes have less than 6 carbon atoms. Most preferably, the composition does not include any lower alkanes having less than 6 carbon atoms.

Oils containing suitable aliphatic compounds for use according to the disclosure include for example, without limitation, kerosene, diesel, fuel oils, and combinations thereof.

Kerosene is a thin, clear liquid formed from hydrocarbons, with a density of 0.78-0.81 g/cm$^3$, is obtained from the fractional distillation of petroleum between 150 °C (300 °F) and 275 °C (527 °F) at atmospheric pressure, resulting in a mixture of carbon chains that typically contain 6 to 16 carbon atoms per molecule. Major constituents of kerosene include n-dodecane, alkyl benzenes and derivatives, and naphthalene and derivatives.

Diesel fuel in general is any liquid fuel used in diesel engines. The most common is a specific fractional distillate of petroleum fuel oil, but alternatives that are not derived from petroleum, such as biodiesel, biomass to liquid (BTL) or gas to liquid (GTL) diesel, are increasingly being developed and adopted. To distinguish these types, petroleum-derived diesel is increasingly called petrodiesel. Petroleum diesel, also called petrodiesel or fossil diesel, is produced from the fractional distillation of crude oil between 200 °C (392 °F) and 350 °C (662 °F) at atmospheric pressure, resulting in a mixture of carbon chains that typically contain between 8 and 21 carbon atoms per molecule.

In various embodiments, the aliphatic compounds are in the rage of about 10% to about 90% by weight of the composition. More preferably, the aliphatic compounds are in the range of about 20% to about 80% by weight of the composition. Most preferably, the aliphatic compounds are in the range of about 30% to about 70% by weight of the composition.

**Haloalkane**

The one or more haloalkanes of the composition of the present disclosure have 9 to 24 carbons atoms.

In various embodiments, the one or more haloalkanes comprise a monohaloalkane. In various embodiments, the one or more haloalkanes comprise a 1-haloalkane.

The one or more haloalkanes comprise a bromoalkane.

In various embodiments and preferably, the one or more haloalkanes is or comprise 1-bromohexadecane ("BHD").

In various embodiments, the one or more haloalkanes are in the rage of about 10% to about 90% by weight of the composition. In various embodiments, the one or more haloalkanes are in the range of about 20% to about 80% by weight of the composition. In various embodiments, the one or more haloalkanes are in the range of about 30% to about 70% by weight of the composition.

## Crude Oil

The composition additionally comprises crude oil. Such a composition can be used, for example, to help inhibit the settling or precipitation of asphaltene or paraffin from the crude oil.

## Other Additives

A composition according to the disclosure can contain additives that are commonly used in oil field applications. These include, for example, but are not necessarily limited to, surfactants, oxygen scavengers, alcohols, corrosion inhibitors, chelating agents, sulfide scavengers, particulates, bactericides, and combinations thereof. Of course, other additives should be selected for not interfering with the purpose of the composition or a treatment fluid of the composition.

## Additional Composition Considerations

In various embodiments, the composition comprises less than about 5% by weight of aromatic compounds. More preferably, the composition comprises less than about 1% by weight of aromatic compounds.

Preferably, the composition comprises less than about 0.25% by weight of any solvents selected from the group consisting of: terpenes, aromatic compounds, heavy aromatic naphtha, cyclohexanone, N-2-methyl pyrrolidone, and N-ethyl-2-pyrrolidone. More preferably, the composition does not include any of such solvents. Preferably, the composition comprises less than about 0.25% by weight of any solvents having a Snyder polarity index greater than 2.

Preferably, the composition comprises less than about 5% by weight water. More preferably, the composition comprises less than about 0.25% by weight water. Most preferably, the composition does not include any water.

Preferably, the composition the composition comprises less than about 5% by weight supercritical carbon dioxide. More preferably, the composition does not include any supercritical carbon dioxide.

## Method of Treating a Well with the Composition as a Treatment Fluid

In addition, a method for removing at least some of an organic material in a portion of a wellbore, wellbore tubular, fracture system, matrix of a subterranean formation, or pipeline is provided. The method comprising the steps of: (A) forming or providing such a composition; and (B) contacting the composition with the portion.

According to an embodiment of the disclosure, the compositions and methods can be used to help prevent the precipitation of asphaltene or paraffin from crude oil. For example, such an embodiment can be useful in a subterranean formation, a wellbore, or a pipeline.

The present disclosure also relates to oil recovery techniques in which the recovery of oil from a reservoir is assisted by injecting a solvent composition into the reservoir formation to reduce the viscosity of the crude oil therein and to inhibit asphaltene or paraffin deposits. Such techniques have been applied to the recovery of various oils, including the recovery of heavy oils and the enhanced recovery of medium and light oils. A composition according to the disclosure can be mixed with the crude oil and form a mixture that has lower viscosity than that of the undiluted oil. In addition, the mixture helps prevent the depositing of asphaltene or paraffin from the crude oil as it is produced from the subterranean formation.

According to another embodiment of the disclosure, compositions and methods are provided that can be used to help remove at least some of a deposited solid organic material in a portion of a wellbore, wellbore tubular, fracture system, matrix of a subterranean formation, or pipeline.

A fluid can be prepared at the job site, prepared at a plant or facility prior to use, or certain components of the fluid can be pre-mixed prior to use and then transported to the job site. Certain components of the fluid may be provided as a "dry mix" to be combined with fluid or other components prior to or during introducing the fluid into the well.

In certain embodiments, the preparation of a fluid composition according to the disclosure can be done at the job site in a method characterized as being performed "on the fly." The term "on-the-fly" is used herein to include methods of combining two or more components wherein a flowing stream of one element is continuously introduced into flowing stream of another component so that the streams are combined and mixed while continuing to flow as a single stream as part of the on-going treatment. Such mixing can also be described as "real-time" mixing.

In various embodiments, a step of forming a fluid composition for use in a well can including the use of mixing equipment, such as commonly found on a well site during a treatment operations, including, for example, a blender or a manifold for mixing two or more component streams form a stream of the treatment fluid.

In various embodiments, the step of contacting the composition can include, for example, introducing or delivering the composition into a well or pipeline.

Often the step of delivering a fluid into a well or pipeline is within a relatively short period after forming the fluid, for example, less within 30 minutes to one hour. More preferably, the step of delivering the fluid is immediately after the step of forming the fluid, which is "on the fly."

It should be understood that the step of delivering a fluid of the composition into a well or pipeline can advantageously include the use of one or more fluid pumps.

In an embodiment of treating a well, the step of introducing is preferably at a rate and pressure below the fracture pressure of the treatment zone.

Preferably, the step of introducing the composition further comprises the step of: placing the composition in the portion of the well to be treated for a sufficient contact time for the organic solvent blend to dissolve a substantial amount of the organic material.

In an embodiment adapted for removing organic deposits, the step of contacting the composition with a portion to be treated with the composition should be sufficient to dissolve or help remove asphaltene or paraffin deposit in the portion.

In various embodiments, the step of flowing back from a portion treated with the a composition according to the disclosure is within 7 days of the step of introducing.

In various embodiments, after any such well treatment with a composition according to the disclosure, a step of producing oil or gas from the subterranean formation is the desirable objective. Similarly, after any such treatment of a pipeline, the transmission of crude oil is the desirable objective.

### Other Treatment Considerations

No special mixing equipment is required for a composition according to the disclosure.

The aliphatic compounds and haloalkane according to the disclosure can be transported at ambient temperature and pressure. For extreme conditions, one can refer to individual fluid material safety data sheets ("MSDS") for such compounds.

In various embodiments, the compositions are environmental friendly.

No specific pre-job modeling is required to practice the methods according to the disclosure.

In various embodiments of the composition, it is a fluid. The fluid can be a Newtonian fluid that has similar characteristics such as diesel.

No specific property of the aliphatic compounds and haloalkane of the composition is reported to affect pumps or mud motors.

No vibration or lubricity concerns or considerations relating to the fluid or equipment being used with the fluid.

No turbulent or laminar flow characteristics of a composition according to the disclosure is expected to affect the drill pipe (for example, erosion of the drill pipe), drill bit, MWD/LWD, and any other associated equipment.

No special types of equipment that have special application with a composition according to the disclosure.

A treatment fluid according to the disclosure can be homogenous and not expected to separate on standing over time.

Hole cleaning not required according to the methods of the disclosure.

### Examples

To facilitate a better understanding of the present disclosure, the following examples of certain aspects of some embodiments are given. In no way should the following examples be read to limit, or define, the entire scope of the disclosure.

*Laboratory Testing Procedure to Determine Crude Oil Loading*

The laboratory testing procedure used to determine an appropriate loading range for crude oil in a test fluid system was as follows: (i) Add 10 ml of hexane to each 10 ml graduated centrifuge tubes for asphaltene determination. (ii) Use a micropipette to add crude oil to the fluid. Dosages of 50, 100, 200 and 500 $\mu$L were tested. (iii) Cap and shake the tubes vigorously for 60 seconds. Allow the tubes to stand for two hours. Do not centrifuge. Observe and record the percentage of sedimentation at the bottom of the tubes due to gravity. (iv) Select the amount of crude oil that will result in 4 to 10% settling based on the entire volume of the fluid in the centrifuge tube. (v) Repeat steps (i) through (iv) for newly developed composition using 200 or 300 $\mu$L of crude oil and record the percentage of sedimentation.

The results are shown in **Table 1.**

**Table 1 - Determination of Asphaltene Loading**

| No | Solvent | Amount of Fluid System Used | Amount of Crude Oil Used | % Setting |
|---|---|---|---|---|
| 1 | Hexane | 10 ml | 50 | 7 |
| 2 | | | 100 | 2.5 |
| 3 | | | 200 | 6 |
| 4 | | | 500 | 18 |

*Laboratory Testing of Haloalkane Compositions*

Compositions according to the disclosure were formulated, to which the previously determined loading of crude oil was added. The test samples were then monitored over time for settling of any asphaltene or paraffin material. The percentage of asphaltene dispersed is determined by the following formula:

$$\text{Percent Dispersed} = \left[ \frac{\text{Solids in Blank} - \text{Solids in Treated}}{\text{Solids in Blank}} \right] \times 100$$

The SURDYNE™ B140 product used in the examples shown in Table 2 is a distillate hydrotreated light kerosene. It contains C11 to C14 carbon, mainly alkanes, isoalkanes, cyclics, and less than about 2% aromatic compounds. Upon mixture with the haloalkane in the following examples, the compositions contain less than about 1% aromatic compounds.
The haloalkane used in the examples shown in Table 2 was 1-bromohexadecane.

**Table 2 - Using Newly Developed Composition**

| Sr. No | Fluid System | Amount of New Composition | Amount of Crude Oil Used | Asphaltene Deposit | | Asphaltene and Paraffin Dispersed |
|---|---|---|---|---|---|---|
| | | | | % Setting | Time | % Dispersed |
| 1 | SURDYNE™ aliphatic + Bromohexadecane (1:1) | 10 ml | 200µL | No Deposits | After 24 Hrs | 100 |
| | | | | No Deposits | After 48 Hrs | 100 |
| | | | | No Deposits | After 72 Hrs | 100 |
| | | | | No Deposits | After 96 Hrs | 100 |
| | | | | No Deposits | After 5 Days | 100 |
| | | | | No Deposits | After 10 days | 100 |
| | | | | No Deposits | After 20 Days | 100 |
| | | | | No Deposits | After 3 Months | 100 |
| | | | | No Deposits | After 6 months | 100 |

(continued)

| Sr. No | Fluid System | Amount of New Composition | Amount of Crude Oil Used | Asphaltene Deposit | | Asphaltene and Paraffin Dispersed |
|--------|--------------|---------------------------|--------------------------|--------------------|--------|------------------------------------|
| | | | | % Setting | Time | % Dispersed |
| 2 | SURDYNE™ aliphatic + Bromohexadecane (1:1) | 10 ml | 300μL | No Deposits | After 24 Hrs | 100 |
| | | | | No Deposits | After 48 Hrs | 100 |
| | | | | No Deposits | After 72 Hrs | 100 |
| | | | | No Deposits | After 96 Hrs | 100 |
| | | | | No Deposits | After 5 Days | 100 |
| | | | | No Deposits | After 10 days | 100 |
| | | | | No Deposits | After 20 Days | 100 |
| | | | | No Deposits | After 3 Months | 100 |
| | | | | No Deposits | After 6 months | 100 |

All the tested fluid system formulations in **Table 2** showed no increase in traces of asphaltene or paraffin settling even after six months. This indicates the chemical composition is highly stable and helps in inhibiting asphaltene and paraffin settling to a great extent.

Such a composition of SURDYNE™ B140 aliphatic and 1-bromohexadecane has a desirably high flash point (215°F) with low or no aromatics and a low Chemical Score Index (CSI) of 255, which is acceptable in the industry.

### Conclusion

Therefore, the present disclosure is well adapted to attain the ends and advantages mentioned as well as those that are inherent therein.

The exemplary fluids disclosed herein may directly or indirectly affect one or more components or pieces of equipment associated with the preparation, delivery, recapture, recycling, reuse, or disposal of the disclosed fluids. For example, the disclosed fluids may directly or indirectly affect one or more mixers, related mixing equipment, mud pits, storage facilities or units, fluid separators, heat exchangers, sensors, gauges, pumps, and compressors, used to generate, store, monitor, regulate, or recondition the exemplary fluids. The disclosed fluids may also directly or indirectly affect any transport or delivery equipment used to convey the fluids to a well site or downhole such as, for example, any transport vessels, conduits, pipelines, trucks, tubulars, or pipes used to fluidically move the fluids from one location to another, any pumps, compressors, or motors (*e.g.*, topside or downhole) used to drive the fluids into motion, any valves or related joints used to regulate the pressure or flow rate of the fluids, and any sensors (*i.e.,* pressure and temperature), gauges, or combinations thereof. The disclosed fluids may also directly or indirectly affect the various downhole equipment and tools that may come into contact with the chemicals/fluids such as, but not limited to, 100drill string, coiled tubing, drill pipe, drill collars, mud motors, downhole motors or pumps, floats, MWD/LWD tools and related telemetry equipment, drill bits (including roller cone, PDC, natural diamond, hole openers, reamers, and coring bits), sensors or distributed sensors, downhole heat exchangers, valves and corresponding actuation devices, tool seals, packers and other wellbore isolation devices or components.

The particular embodiments disclosed above are illustrative only, as the present disclosure may be modified and practiced in different but equivalent manners apparent to those skilled in the art having the benefit of the teachings herein. It is, therefore, evident that the particular illustrative embodiments disclosed above may be altered or modified and all such variations are considered within the scope of the present disclosure.

The various elements or steps according to the disclosed elements or steps can be combined advantageously or practiced together in various combinations or sub-combinations of elements or sequences of steps to increase the efficiency and benefits that can be obtained from the disclosure.

It will be appreciated that one or more of the above embodiments may be combined with one or more of the other embodiments, unless explicitly stated otherwise.

The disclosure illustratively disclosed herein suitably may be practiced in the absence of any element or step that is not specifically disclosed or claimed.

Furthermore, no limitations are intended to the details of construction, composition, design, or steps herein shown, other than as described in the claims.

**Claims**

1. A composition comprising:

   (A) one or more aliphatic compounds having 6 to 21 carbon atoms; and
   (B) one or more haloalkanes having 9 to 24 carbon atoms wherein the one or more haloalkanes comprises a bromoalkane; and
   (C) crude oil.

2. The composition according to claim 1, wherein the aliphatic compounds are in the range of 10% to 90% by weight of the composition.

3. The composition according to claim 1, wherein the one or more haloalkanes have 14 to 18 carbons atoms.

4. The composition according to claim 1, wherein the one or more haloalkanes are in the range of 10% to 90% by weight of the composition.

5. The composition according to claim 1, wherein the composition comprises less than 5% by weight of aromatic compounds

6. The composition according to claim 1, wherein the composition comprises less than 0.25% by weight of any solvents selected from the group consisting of: terpenes, aromatic compounds, heavy aromatic naphtha, cyclohexanone, N-2-methyl pyrrolidone, and N-ethyl-2-pyrrolidone.

7. The composition according to claim 1, wherein the composition comprises less than 5% by weight supercritical carbon dioxide.

8. The composition according to claim 1, wherein the bromoalkane is 1-bromohexadecane.

9. A method for inhibiting the deposition of an organic material or for removing at least some of the deposited organic material in a portion of a wellbore, wellbore tubular, fracture system, matrix of a subterranean formation, or pipeline, the method comprising the steps of:

   (A) forming or providing a composition comprising:

      (i) one or more aliphatic compounds having 6 to 21 carbon atoms;
      (ii) one or more haloalkanes having 9 to 24 carbon atoms, wherein the one or more haloalkanes comprises a bromoalkane; and
      (iii) crude oil; and

   (B) contacting the composition with the portion of the wellbore or with the deposited organic material in the wellbore.

10. The method according to claim 9, wherein the composition is as defined in any one of claims 2-7.

11. The method according to claim 9, wherein the portion is a matrix of a subterranean formation, and wherein the subterranean formation contains crude oil.

**12.** The method according to any of claims 9-11, wherein forming or providing the composition comprises mixing at least (i) the one or more aliphatic compounds and (ii) the one or more haloalkanes in mixing equipment.

**13.** The method according to any of claims 9-12, wherein contacting the composition comprises pumping the composition using one or more fluid pumps.

**14.** The method according to any of claims 9-13, wherein contacting the composition comprises introducing the composition through a tubular in a wellbore of the well.

**Patentansprüche**

**1.** Zusammensetzung, umfassend:

(A) eine oder mehrere aliphatische Verbindungen, die 6 bis 21 Kohlenstoffatome aufweisen; und
(B) ein oder mehrere Haloalkane, die 9 bis 24 Kohlenstoffatome aufweisen, wobei das eine oder die mehreren Haloalkane ein Bromalkan umfassen; und
(C) Rohöl.

**2.** Zusammensetzung nach Anspruch 1, wobei die aliphatischen Verbindungen im Bereich von 10 Gewichts-% bis 90 Gewichts-% der Zusammensetzung liegen.

**3.** Zusammensetzung nach Anspruch 1, wobei das eine oder die mehreren Haloalkane 14 bis 18 Kohlenstoffatome aufweisen.

**4.** Zusammensetzung nach Anspruch 1, wobei das eine oder die mehreren Haloalkane im Bereich von 10 Gewichts-% bis 90 Gewichts-% der Zusammensetzung liegen.

**5.** Zusammensetzung nach Anspruch 1, wobei die Zusammensetzung weniger als 5 Gewichts-% an aromatischen Verbindungen umfasst.

**6.** Zusammensetzung nach Anspruch 1, wobei die Zusammensetzung weniger als 0,25 Gewichts-% an beliebigen Lösungsmitteln umfasst, die aus der Gruppe ausgewählt sind, die aus Folgendem besteht: Terpenen, aromatischen Verbindungen, schwerem aromatischen Naphtha, Cyclohexanon, N-2-Methylpyrrolidon und N-Ethyl-2-pyrrolidon.

**7.** Zusammensetzung nach Anspruch 1, wobei die Zusammensetzung weniger als 5 Gewichts-% an überkritischem Kohlendioxid umfasst.

**8.** Zusammensetzung nach Anspruch 1, wobei das Bromalkan 1-Bromhexadecan ist.

**9.** Verfahren zur Hemmung der Abscheidung eines organischen Materials oder zur Entfernung von zumindest einem Teil des abgeschiedenen organischen Materials in einem Abschnitt eines Bohrlochs, eines Bohrlochrohres, eines Fraktursystems, einer Matrix einer unterirdischen Erdformation oder einer Pipeline, wobei das Verfahren die folgenden Schritte umfasst:

(A) Bilden oder Bereitstellen einer Zusammensetzung, umfassend:

(i) eine oder mehrere aliphatische Verbindungen, die 6 bis 21 Kohlenstoffatome aufweisen;
(ii) eine oder mehrere Haloalkane, die 9 bis 24 Kohlenstoffatome aufweisen, wobei das eine oder die mehreren Haloalkane ein Bromalkan umfassen; und
(iii) Rohöl; und

(B) Kontaktieren der Zusammensetzung mit dem Abschnitt des Bohrlochs oder mit dem abgeschiedenen organischen Material in dem Bohrloch.

**10.** Verfahren nach Anspruch 9, wobei die Zusammensetzung wie in einem der Ansprüche 2-7 definiert ist.

**11.** Verfahren nach Anspruch 9, wobei der Abschnitt eine Matrix einer unterirdischen Erdformation ist und wobei die unterirdische Erdformation Rohöl enthält.

**12.** Verfahren nach einem der Ansprüche 9-11, wobei das Bilden oder Bereitstellen der Zusammensetzung das Mischen von zumindest

(i) der einen oder den mehreren aliphatischen Verbindungen und
(ii) dem einen oder den mehreren Haloalkanen in Mischausrüstung umfasst.

**13.** Verfahren nach einem der Ansprüche 9-12, wobei das Kontaktieren der Zusammensetzung das Pumpen der Zusammensetzung unter Verwendung einer oder mehrerer Fluidpumpen umfasst.

**14.** Verfahren nach einem der Ansprüche 9-13, wobei das Kontaktieren der Zusammensetzung das Einführen der Zusammensetzung durch ein Rohr in einem Bohrloch der Bohrung umfasst.

**Revendications**

**1.** Composition comprenant :

(A) un ou plusieurs composés aliphatiques ayant de 6 à 21 atomes de carbone ; et
(B) un ou plusieurs haloalcanes ayant de 9 à 24 atomes de carbone, dans laquelle les un ou plusieurs haloalcanes comprennent un bromoalcane ; et
(C) du pétrole brut.

**2.** Composition selon la revendication 1, dans laquelle les composés aliphatiques se situent dans l'intervalle allant de 10 % à 90 % en poids de la composition.

**3.** Composition selon la revendication 1, dans laquelle les un ou plusieurs haloalcanes ont de 14 à 18 atomes de carbone.

**4.** Composition selon la revendication 1, dans laquelle les un ou plusieurs haloalcanes se situent dans l'intervalle allant de 10 % à 90 % en poids de la composition.

**5.** Composition selon la revendication 1, dans laquelle la composition comprend moins de 5 % en poids de composés aromatiques.

**6.** Composition selon la revendication 1, dans laquelle la composition comprend moins de 0,25 % en poids de tous solvants choisis dans le groupe constitué de : terpènes, composés aromatiques, naphta aromatique lourd, cyclohexanone, N-2-méthylpyrrolidone et éthyl-2-pyrrolidone.

**7.** Composition selon la revendication 1, dans laquelle la composition comprend moins de 5 % en poids de dioxyde de carbone supercritique.

**8.** Composition selon la revendication 1, dans laquelle le bromoalcane est le 1- bromohexadécane.

**9.** Procédé pour inhiber le dépôt d'un matériau organique ou pour éliminer au moins une partie du matériau organique déposé dans une partie d'un puits de forage, d'un élément tubulaire de puits de forage, d'un système de fracture, d'une matrice d'une formation souterraine ou d'une canalisation, le procédé comprenant les étapes de :

(A) formation ou de fourniture d'une composition comprenant :

(i) un ou plusieurs composés aliphatiques ayant de 6 à 21 atomes de carbone ;
(ii) un ou plusieurs haloalcanes ayant de 9 à 24 atomes de carbone, dans lequel les un ou plusieurs haloalcanes comprennent un bromoalcane ; et
(iii) du pétrole brut ; et

(B) mise en contact de la composition avec la partie du puits de forage ou avec le matériau organique déposé dans le puits de forage.

**10.** Procédé selon la revendication 9, dans lequel la composition est telle que définie dans l'une quelconque des revendications 2 à 7.

**11.** Procédé selon la revendication 9, dans lequel la partie est une matrice d'une formation souterraine et dans lequel la formation souterraine contient du pétrole brut.

**12.** Procédé selon l'une quelconque des revendications 9 à 11, dans lequel la formation ou la fourniture de la composition comprend le mélange au moins (i) des un ou plusieurs composés aliphatiques et (ii) des un ou plusieurs haloalcanes dans un équipement de mélange.

**13.** Procédé selon l'une quelconque des revendications 9 à 12, dans lequel la mise en contact de la composition comprend le pompage de la composition en utilisant une ou plusieurs pompes à fluide.

**14.** Procédé selon l'une quelconque des revendications 9 à 13, dans lequel la mise en contact de la composition comprend l'introduction de la composition à travers un élément tubulaire dans un puits de forage du puits.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4775489 A

**Non-patent literature cited in the description**

- **K.A. FROST ; R.D. DAUSSIN, SPE ; M.S. VAN DOMELEN.** New, Highly Effective Asphaltene Removal System with Favorable HSE Characteristics. *Halliburton, Society of Petroleum Engineers, SPE,* vol. 112420, 2008

- Society of Petroleum Engineers ("SPE") 126451. **JOHNNY SANDERS ; DENISE TUCK ; ROBERT SHERMAN.** Are your Chemical Products Green?-A Chemical Hazard Scoring System. Halliburton, 2010